# EUROPÄISCHE PATENTSCHRIFT

(11) **EP 0 868 934 B1**
(45) Veröffentlichungstag und Bekanntmachung des Hinweises auf die Patenterteilung: **16.06.2004**
(21) Anmeldenummer: 97121822.7
(22) Anmeldetag: 11.12.1997
(51) Int. Cl.: B01D 46/04, B01D 46/24

(54) **Schwebstoff-Filtersystem**
Filter system for airborne particles
Système de filtration pour matières suspendues

(30) Priorität: 24.03.1997 US 823807
(43) Veröffentlichungstag der Anmeldung: 07.10.1998
(73) Patentinhaber: LTG LUFTTECHNISCHE GMBH, 70435 Stuttgart (DE)
(72) Erfinder: Stueble, Helmut, Spartanburg, South Carolina 29306 (US)
(74) Vertreter: Grosse, Rainer, Dipl.-Ing.

(56) Entgegenhaltungen:
- EP-A- 0 459 307
- US-A- 4 154 588
- US-A- 4 289 510
- US-A- 5 571 299

## Beschreibung

Die vorliegende Erfindung betrifft ein Schwebstoff-Filtersystem, das eine Gruppierung oder zwei Gruppierungen von trommelartigen Filtern aufweist, wobei Luft von der Innenseite jedes Filters zur Außenseite strömt. Die Filteranordnung weist ein System zum Entfernen von Filtergut von der Innenseite der trommelartigen Filter auf.

Schwebstoff-Abfallmaterial, das in Industrieanlagen erzeugt wird, beispielsweise in der Textilindustrie, bei der Holzverarbeitung oder in anderen Systemen, bei welchen beträchtliche Anteile an Schwebstoffen oder Staub erzeugt werden, können durch unterschiedliche Arten von Filtersystemen ausgefiltert werden, beispielsweise solche, die große Trommelfilter- und Beutel- bzw. Sackfilteranordnungen enthalten. Bei herkömmlichen Trommelfiltern handelt es sich um große zylindrische Filter mit automatischen Abtrenn- bzw. Abstreifmechanismen zum Entfernen des Filterguts von der Trommel. Diese Filter erfordern jedoch umfangreichen Stellplatz. Sackfiltersysteme sind relativ sperrig und erfordern häufig eine manuelle Reinigung.

Mehrfach-Trommelfilter bieten einen kompakteren Aufbau, der eine große Menge an Schwebstoffen entfernen kann. Diese Filter weisen eine Gruppierung von kleinen trommelartigen Filtern auf, die in paralleler Gruppierung angeordnet sind. Jeder einzelne Trommelfilter ist wesentlich kleiner als der herkömmliche Trommelfilter. Beispielsweise kann eine einzige kleine Filtertrommel einer Mehrtrommelfilteranordnung ungefähr einen halben Meter Länge bei einem Durchmesser von ungefähr 40 Zentimetern aufweisen, wobei entsprechende Abmessungen für einen herkömmlichen Trommelfilter mehrere Füße betragen können. Die Filteranordnung führt zu einer relativ großen Gesamtreinigungsoberfläche in kompakter Ausbildung, die es der Gruppierung erlaubt, ein relativ großes Luftvolumen zu filtern, während sie relativ wenig Standplatz erfordert.

Jeder Filter in der Gruppierung ist ein Zylinder mit einem Filtermedium um sein äußeres herum. Bei dem Filtermaterial kann es sich um maschenartiges Material handeln, unterschiedliche gewobene oder Nonwoven-Materialien oder um ein beliebiges geeignetes Medium, wie sich dem Fachmann auf diesem Gebiet der Technik erschließt. Schwebstoffe tragende Luft tritt in ein Ende der Trommel ein und wird durch das Umfangsfiltermaterial gezogen, wodurch auf den Filterinnenflächen Filtergut aufwächst.

Die US-PS 4,154,588 zeigt einen Trommelfilter mit geschlossenem Boden, der als Lagerung dient. Antriebsmechanismus und Saugquelle befinden sich auf der Schmutzgasseite. Ähnliche Verhältnisse liegen beim Gegenstand der US-PS 4,289,510 vor. Auch bei der EP 0 459 307 wird die Reinigung der inneren Mantelfläche der Trommelfilter von der Zuströmöffnung her, also vom Schmutzgasbereich her, durchgeführt. Das Gleiche gilt für den Gegenstand der US-PS 5,114,444.

Ziel der Erfindung ist es, die vorstehend zum Stand der Technik erläuterten Nachteile zu überwinden. Die Aufgabe der vorliegenden Erfindung besteht demnach darin, ein verbessertes Schwebstoff-Filtersystem zu schaffen. Bevorzugt ist ein Schwebstoff-Filtersystem mit einem automatischen Reinigungssystem vorgesehen, das ein verbessertes Antriebssystem aufweist. Insbesondere soll das Schwebstoff-Filtersystem ein Reinigungssystem aufweisen, das einen optimierten Saugdurchfluss aufweist.

Gelöst werden diese Aufgaben durch ein Filtersystem für Schwebstoff-Abfallmaterial mit den Merkmalen des Anspruchs 1 und des Anspruchs 11. Vorteilhafte Weiterbildungen sind in den Unteransprüchen angegeben.

Demnach sieht die Erfindung vor, dass jeder Filter in der Gruppierung ein Vorderende aufweist, in welches Schwebstoffe tragende Luft strömt. Ein rückwärtiges Ende befindet sich in Längsrichtung gegenüberliegend zum Vorderende. Ein Filterabschnitt erstreckt sich zwischen dem Vorderende und dem rückwärtigen Ende derart, dass das Vorderende, das rückwärtige Ende und der Filterabschnitt einen Innenbereich des Trommelfilters festlegen. Ein Rahmen ist in permanenter betriebsmäßiger bzw. operativer Stellung benachbart zu der Trommelfiltergruppierung auf deren Reingasseite angeordnet. Jedes von mehreren länglichen Elementen ist auf dem Rahmen betriebsmäßig angeordnet und erstreckt sich in den Innenbereich des Trommelfilters. Jedes längliche Element weist eine Saugdüse auf, die sich von ihm erstreckt, um mit der Innenseite des zylindrischen Filterabschnitts des Trommelfilters zum Entfernen von Filtergut von dort in Verbindung zu stehen. Ein auf der Reingasseite liegender Antriebsmechanismus befindet sich in betriebsmäßiger Verbindung mit den länglichen Elementen, um jedes dieser Elemente um seine Längsachse zu drehen und jedes längliche Element im wesentlichen entlang der Längsachse des Trommelfilters hin und her zu bewegen, in welches es sich hinein erstreckt, so dass ein Saugende der Saugdüse im wesentlichen über die Innenseite des Filterabschnitts bewegt wird. Eine Saugquelle liegt auf der Reingasseite und befindet sich in betriebsmäßiger Verbindung mit jeder Saugdüse, wobei die Saugquelle so konfiguriert beziehungsweise aufgebaut ist, dass sie Saugkraft beziehungsweise Unterdruck an die Saugdüse anlegt, so dass das Filtergut durch diese hindurchgezogen wird, wobei der Rahmen benachbart zu den rückwärtigen Enden der Trommelfilter der Gruppierung von Trommelfiltern angeordnet ist und sich die länglichen Elemente durch die jeweiligen rückwärtigen Enden erstrecken. Das rückwärtige Ende von jedem der Trommelfilter weist eine Platte auf, um eine Strömung der die Schwebstoffe tragenden Luft durch dieses hindurch zu verhindern, wobei jedes der länglichen Elemente sich durch eine jeweilige Platte in dichtendem Eingriff mit dieser erstreckt.

Ferner betrifft die Erfindung ein Schwebstoff-Filtersystem nach Anspruch 11.

Nachfolgend wird die Erfindung anhand der Zeichnung beispielhaft näher erläutert; es zeigen:
- Figur 1: eine perspektivische Ansicht einer Ausführungsform des erfindungsgemäßen Filtersystems,
- Figur 2: eine zweite perspektivische Ansicht der Ausführungsform des in Figur 1 gezeigten Filtersystems,
- Figur 3: eine vergrößerte Teilansicht eines erfindungsgemäß aufgebauten Filtersystems unter Darstellung eines Trommelfilters und einer Einrichtung zum Entfernen von Filtergut aus diesem,
- Figur 4: eine perspektivische Ansicht einer weiteren Ausführungsform des erfindungsgemäßen Filtersystems,
- Figur 5: eine Draufsicht einer Ausführungsform eines Antriebsmechanismus, der in Übereinstimmung mit dem erfindungsgemäßen Filtersystem bzw. für dieses aufgebaut ist,
- Figur 6A: eine teilweise Draufsicht des Antriebsmechanismus entlang den Linien 6A-6A in Figur 5,
- Figur 6B: eine teilweise Draufsicht entlang den Linien 6B-6B in Figur 5, und
- Figur 6C: eine teilweise Draufsicht entlang den Linien 6C-6C in Figur 5.

Analoge Merkmale und Elemente der vorliegenden Erfindung sind in den Zeichnungen mit denselben Bezugsziffern bezeichnet.

Nunmehr wird im einzelnen auf aktuell bevorzugte Ausführungsformen der Erfindung Bezug genommen, von denen ein oder mehrere Beispiele in den beiliegenden Zeichnungen gezeigt sind. Jedes Beispiel dient zur Erläuterung der Erfindung, ohne dass diese hierauf beschränkt wäre. Tatsächlich erschließen sich dem Fachmann ohne weiteres Modifikationen und Abwandlungen, die an der vorliegenden Erfindung vorgenommen werden können, ohne von ihrem Umfang abzuweichen. Beispielsweise können als Teil einer Ausführungsform dargestellte und erläuterte Bestandteile in einer anderen bzw. weiteren Ausführungsform eingesetzt werden, um eine noch weitere Ausführungsform bereitzustellen. Es ist deshalb beabsichtigt, dass die vorliegende Erfindung diese Modifikationen und Abwandlungen als im Umfang der beiliegenden Ansprüche und ihrer Äquivalente liegend abdeckt.

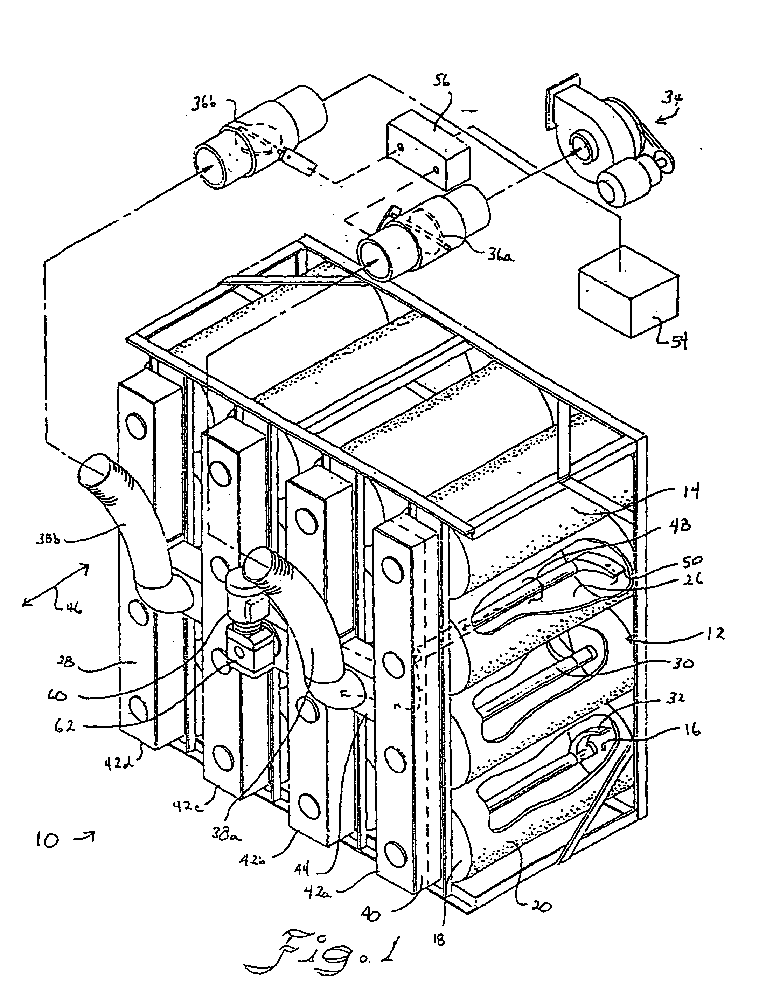

Die vorliegende Erfindung betrifft ein verbessertes Filtersystem, beispielsweise zur Verwendung bei der Textilverarbeitung. Figur 1 zeigt demnach eine aktuell bevorzugte Ausführungsform eines Filtersystems, das allgemein mit der Bezugsziffer 10 bezeichnet ist und eine Gruppierung 12 von bzw. aus Trommelfiltern 14 aufweist. Jeder Trommelfilter 14 weist ein offenes Vorderende 16 und ein geschlossenes rückwärtiges Ende 18 auf, das dem offenen Vorderende in Längsrichtung gegenüberliegt. Ein allgemein zylindrisches Filtermaterial 20, das aus einem maschenartigen, gewobenen, Nonwoven- bzw. nicht gewobenen oder anderen geeigneten Materialien besteht, erstreckt sich zwischen dem rückwärtigen Ende 18, das eine massive Platte umfassen kann, und dem Vorderende 16. Obwohl die Platte am rückwärtigen Ende 18 als flache kreisförmige Scheibe dargestellt ist, versteht es sich, dass ein beliebiges geeignetes Mittel zum Blockieren des Schwebstoffe tragenden Luftstroms vom Trommelfilterinnern eingesetzt werden kann.

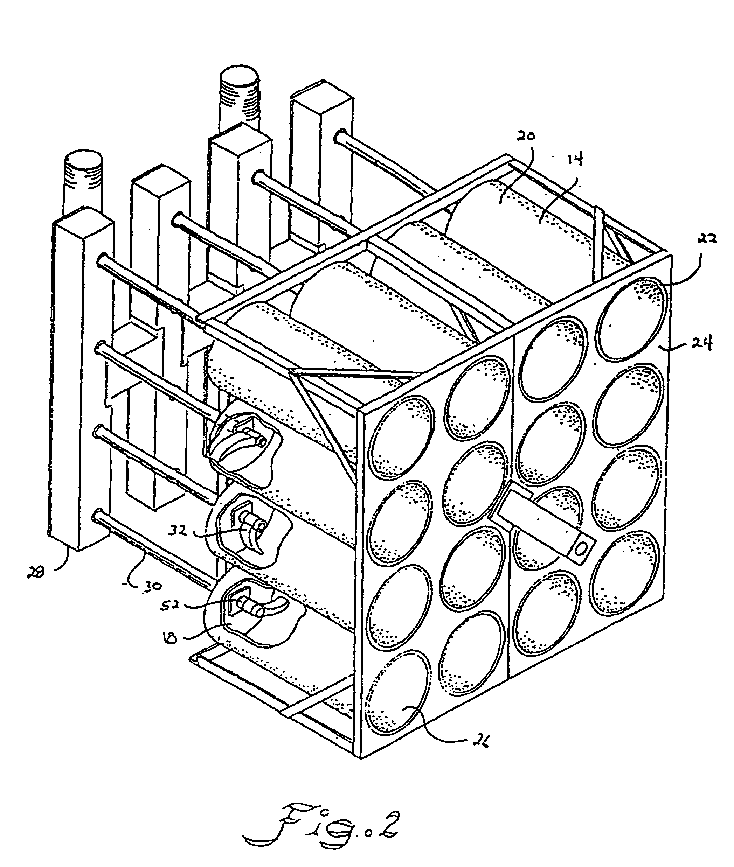

Der Aufbau und die Arbeitsweise einer Trommelfiltergruppierung, die bei der vorliegenden Erfindung verwendet werden kann, ist im US Patent Nr. 5 114 444 offenbart. Kurz gesagt, kann zylindrisches Filtermaterial 20 aus zusammendrückbarem bzw. zusammenfaltbarem oder instabilem Material aufgebaut sein, das einen Ring 22 (Figur 2) aufweist, der an seinem Vorderende angebracht ist, und einen elastischen Strick, der um sein rückwärtiges Ende angebracht ist. Das Filtermaterial kann dadurch vom rückwärtigen Bereich der Gruppierung durch Zusammendrücken der Klammer 22 eingetragen bzw. geladen werden, indem es durch ein geeignetes Loch einer Wand 24 eingeführt wird, wobei die Klammer so freigegeben wird, dass sie in dem Loch festgesetzt ist, wobei das Material über die Platte hinweg nach hinten gezogen wird, welche das rückwärtige Ende 18 abdeckt, und wobei das Material so freigegeben wird, dass der elastische Strick sich zusammenzieht, um das Material um die Platte herum in Stellung zu halten.

Das Vorderende 16 ist für Luftströmung offen. Schwebstoffe tragende Luft strömt von einer stromaufwärtigen Maschinenanordnung zur Wand 24. Der Luftstrom kann stromaufwärts von der Wand 24 durch einen Vorfilter teilweise gefiltert werden, wie sich dem Fachmann erschließt. Diese Luft wird mittels Saugen durch die Öffnungen in der Wand 24 in die Filter 14 und durch das zylindrische Material 20 jedes Filters gezogen, wodurch die Schwebstoffe auf der Innenseite 26 des zylindrischen Filtermaterials gesammelt werden.

Um die Innenseiten bzw. die inneren Oberflächen 26 zu reinigen, trägt ein Rahmen 28 drehbar mehrere längliche Elemente, wie etwa Rohre 30, welche Saugdüsen 32 aufweisen, die sich zu den Innenseiten 26 heraus erstrecken. Das Saugen bzw. die Saugkraft bzw. den Unterdruck wird von einer Saugquelle 34 an jede der Düsen 32 durch Drosselklappen 36a und 36b und durch Schläuche 38a und 38b angelegt, wie in Figur 1, 3 und 5 durch Strömungspfeile dargestellt. Bei den dargestellten Ausführungsformen strömt Filtergut von der Innenseite 26 in eine Düse 32, durch ein Rohr 30 hindurch und in eine rückwärtige Kammer (die bei 40 in gestrichelten Linien gezeigt ist) von einem der vertikalen Blöcke 42a bis 42d des Rahmens 28 hinein. Daraufhin wird sie durch einen ähnlichen rückwärtigen Abschnitt in einem horizontalen Block 44 zu einem Schlauch 38a oder 38b zu einer Drosselklappe 36a oder 36b gezogen.

Damit die Düsen 32 Filtergut von im wesentlichen sämtlichen Innenseitenbereichen 26 entfernen können, bewegt sich der Rahmen 28 in bezug auf die Achsen der Trommelfilter 14 vor und zurück, wie durch einen Pfeil 46 dargestellt, während die Rohre 30 gedreht werden, wie beispielsweise durch einen Pfeil 48 dargestellt. Diese hin- und hergehende Bewegung des Rahmens 28 veranlasst in Verbindung mit der Drehung der Rohre 30 die freien Enden 50 der Düsen 32 dazu, einem schraubenförmigen bzw. spiralförmigen Pfad über ihre jeweiligen Innenseitenbereiche 26 zu folgen.

Der Rahmen 28 ist in Figur 1 in einer vollständig eingerückten Position gezeigt, in welcher die Rohre 30 vollständig in die Innenbereiche ihrer jeweiligen Trommelfilter 14 eingeführt sind. Der Rahmen ist in seiner vollständig ausgezogenen bzw. ausgefahrenen Position in Figur 2 gezeigt. In Figur 2 sind die Düsen 32 zu den rückwärtigen Platten zurückgezogen, durch welche die Rohre 30 sich mit Dichtungen 52 erstrecken.

Die Rohre 30 werden mit einer Geschwindigkeit gedreht, die hoch genug ist, dass die freien Enden 50 der Düsen 32 im wesentlichen die gesamten Oberflächenbereiche 26 abdecken, wenn sie sich zwischen ihren in Figur 1 und 2 gezeigten Positionen bewegen. Um den Luftströmungswirkungsgrad zu maximieren, legt die in Figur 1 gezeigte Ausführungsform an die Düsen 32 Unterdruck bzw. Saugkraft derart an, dass sie ihre jeweiligen Innenseiten 26 reinigen, während sie sich in lediglich einer dieser Richtungen bewegen. Dies wird durch Leiten des Luftstroms von den vertikalen Blöcken 42a und 42b zum Schlauch 38a erreicht, durch Leiten des Luftstroms von den vertikalen Blöcken 42c und 42d zum Schlauch 38b und durch selektives Anlegen von Saugkraft an die Schläuche 38a und 38b.

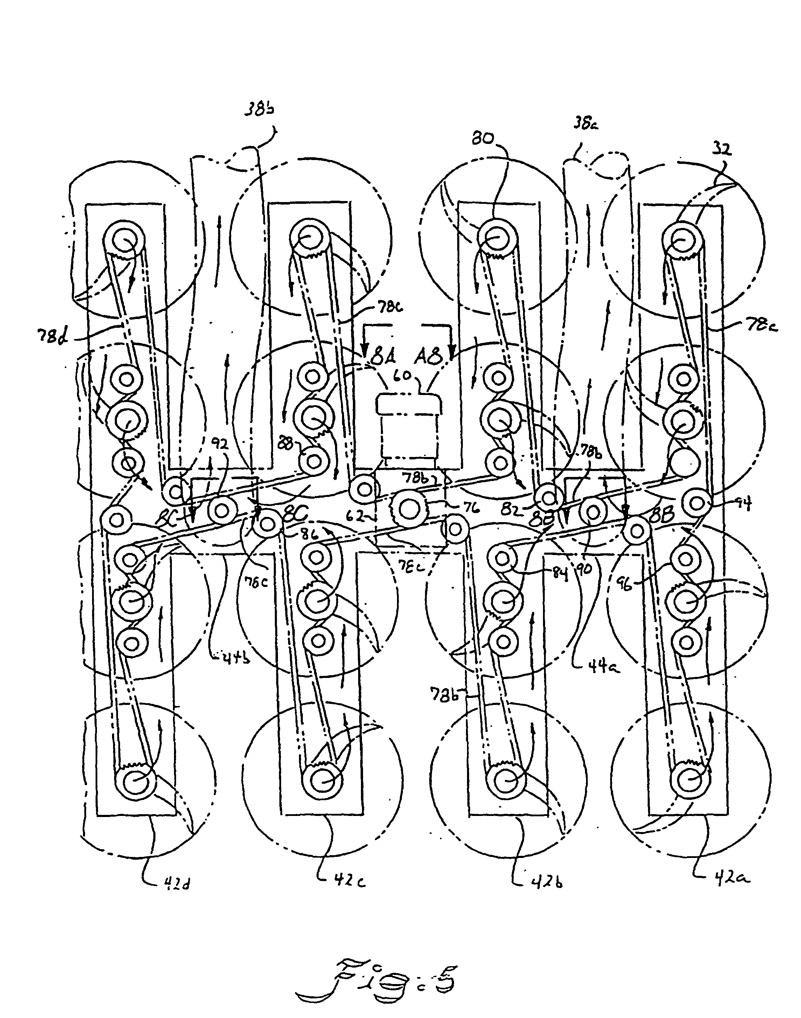

Wie in Figur 1 und durch die Luftströmungspfeile von Figur 5 gezeigt, wird Luft in die rückwärtigen Kammern 40 der vertikalen Elemente 42a und 42b von ihren jeweiligen Rohren 30 in das horizontale Element 44 und dadurch in den Schlauch 38a hinein gezogen. Ein ähnliches Luftströmungsmuster verläuft durch die vertikalen Elemente 42c und 42d zum Schlauch 38b. Wenn der Rahmen 28 sich in der vollständig eingerückten Position befindet, wie in Figur 1 gezeigt, öffnet eine Steuereinrichtung 54, welche Grenzschalter, Zeitsteuerschaltungen wie Sequenztaktgeber oder Computereinrichtungen aufweisen kann, die die Stellung des Rahmens überwachen und vorhersagen, die Drosselklappe 36b und schließt die Drosselklappe 36a durch ein Relais 56. Die Steuereinrichtung 54 ist in Figur 1 aus Gründen der Klarheit schematisch gezeigt. Bei einer bevorzugten Ausführungsform ist sie jedoch auf einem Rahmen 28 angeordnet und weist einen Grenzschalter auf, um auf die Position des Rahmens zu reagieren.

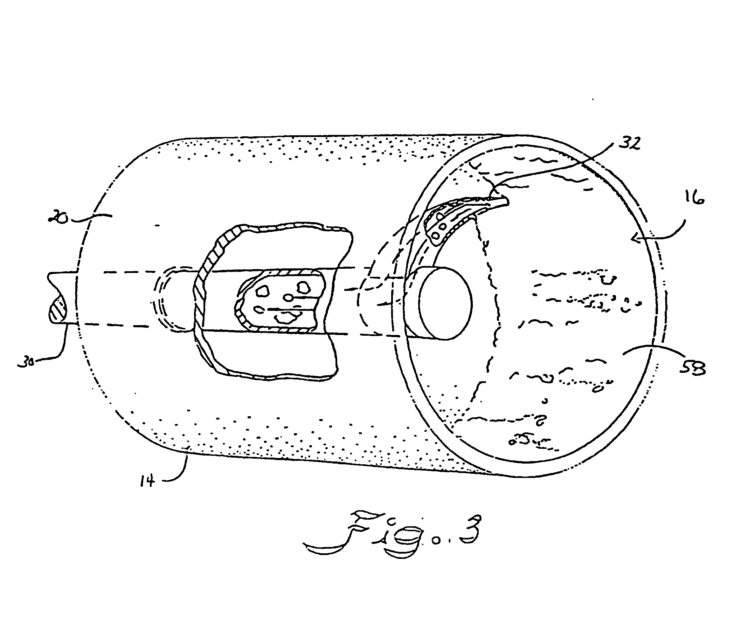

Saugkraft wird demnach von der Saugquelle 34 durch die offene Drosselklappe 36b zu den Saugdüsen der Rohre bereitgestellt, die auf den vertikalen Blöcken 42c und 42d angeordnet sind. Dadurch, dass der Rahmen 28 in seine vollständig ausgezogene Position in Figur 2 gezogen wird, reinigen die Düsen ihre jeweiligen Innenseiten 26. Wenn der Rahmen seine in Figur 2 gezeigte Stellung erreicht, kehrt der Steuermechanismus 54 jedoch die Stellungen der Drosselklappen 36a und 36b derart um, dass die verbleibenden Trommelfilter gereinigt werden, wenn der Rahmen in seine Stellung von Figur 1 rückkehrt. Wie in Figur 3 beispielsweise gezeigt, entfernt eine Düse 32 Filtergut 58 von der Innenseite 26 eines Filters 14, wenn das Rohr 30 sich in Richtung auf das Filtervorderende 16 bewegt.

Der Rahmen 28 befindet sich in dauerhafter Betriebsstellung in bezug auf die Trommelfiltergruppierung 12. Das heißt, der Rahmen bewegt sich nicht von einer Gruppierung zur anderen oder von einem Teil einer Gruppierung zu einem anderen während seines Betriebs. Der Rahmen kann zu Wartungszwecken entfernt werden oder aus einer Gruppierung oder einem Gruppierungsabschnitt zum Gebrauch in einem anderen entnommen werden. Der Rahmen bewegt sich jedoch nicht automatisch von Stellung zu Stellung entlang der Gruppierung oder von einer Gruppierung zu einer anderen als Teil seines Betriebs.

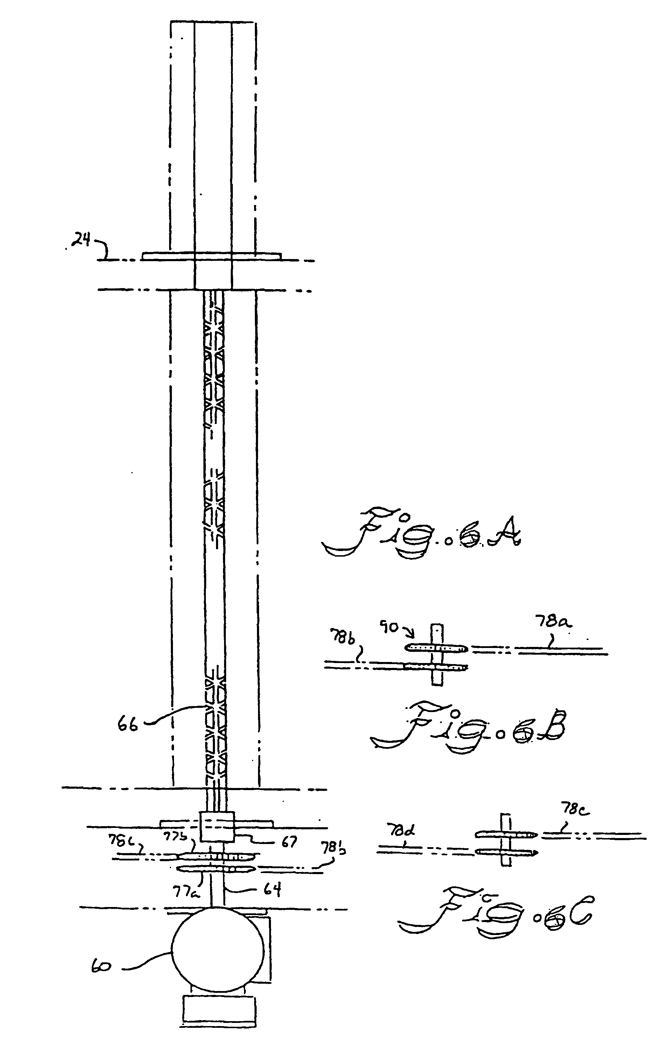

Unter erneutem Bezug auf Figur 1 und 2 wird der Rahmen 28 in bezug auf die Gruppierung 12 durch einen Kreuzspindel-Aufbau hin und her bewegt, der durch einen Motor 60 angetrieben ist. wie in Figur 6A gezeigt, treibt der Motor 60 einen Getriebeaufbau an, der in einer Getriebebox 62 untergebracht ist und seinerseits eine Welle 64 in Drehung versetzt, die mit einer Kreuzspindel 66 durch eine Verbindung 67 verbunden ist. Die Kreuzspindel 66 ist durch eine Mutter aufgenommen, die innerhalb des Gehäuses für die Trommelfilter festgelegt bzw. fixiert ist. Eine Drehung der Kreuzspindel 66 bewegt den Rahmen 28 abwechselnd axial in Richtung auf die Trommelfilter der Gruppierung 12 und von dieser weg zwischen den in Figur 1 und 2 gezeigten Stellungen.

Die Kreuzspindelanordnung erlaubt es dem Motor 60, in einer Richtung betrieben zu werden. Die Rohre 30, die durch den Motor 60 angetrieben werden, drehen dadurch in derselben Richtung, während der gesamten Vor- und Rückbewegung des Rahmens. Es versteht sich jedoch, dass weitere Konfigurationen möglich sind. Beispielsweise können die Düsen 32 sich von ihren jeweiligen Rohren geradewegs nach außen erstrecken und bei der Kreuzspindel 66 kann es sich um eine Einzelrichtungs-Spindel derart handeln, dass der Motor 60 seine Richtung ändert, um den Rahmen zu bewegen. Ein Umsteuern des Motors 60 zur Richtungsänderung kann durch eine Vielzahl von geeigneten Steuermechanismen bewirkt werden, beispielsweise solchen, die Grenzschalter, Positionsdetektoren, Kontaktschalter, Sequenztaktgeber oder Computereinrichtungen aufweisen, welche die Richtung des Motors 60 auf Grundlage der Stellung des Rahmens 28 bewegen. Eine Steuereinrichtung 54 kann verwendet werden, um den Betrieb von sowohl dem Motor wie den Drosselklappen zu steuern.

Bei jeder Konstruktion kann die Vor- und Rückbewegung des Rahmens 28 durchgehend bzw. kontinuierlich so ausgelegt sein, dass die Filter 14 kontinuierlich gereinigt werden. Wie vorstehend erläutert, können die Saugdüsen 32 verwendet werden, um Filtergut von den Innenseiten 26 zu ziehen bzw. abzutrennen, wenn der Rahmen sich in einer Richtung oder in beiden Richtungen bewegt.

Das Antriebssystem für die Rohre 30 ist in Figur 5 und 6A, B, C gezeigt. Wie in Figur 5 gezeigt, treibt der Motor 60 ein Antriebskettenrad 76 durch die Getriebebox 62 an. Wie in Figur 6A gezeigt, handelt es sich bei dem Antriebskettenrad 76 um ein doppeltes Kettenrad, das angetriebene Kettenräder 77a und 77b aufweist, welche Riemen oder Ketten 78b und 78c antreiben. Durch eine Reihe von Spannrollen gespannt, treiben die Riemen 78b und 78c Antriebskettenräder 80 an, die ihrerseits die Rohre 30 (Figur 1) antreiben, um die Düsen 32 in Drehung zu versetzen.

Figur 5 zeigt eine Gruppierung von Filtern mit vier vertikalen Spalten. Das System kann jedoch verwendet werden, um eine beliebige Anzahl von Zeilen oder Spalten anzutreiben. Beispielsweise kann der Riemen oder die Kette 78b für eine zwei-mal-vier-Gruppierung um die gegenüberliegende Seite der Riemenscheibe 82 hinunter zur Riemenscheibe 84 laufengelassen werden. Eine ähnliche Anordnung würde zwischen den Riemenscheiben 86 und 88 im Hinblick auf den Riemen 78c bewirkt werden. Selbstverständlich muss einer der Schläuche 38a und 38b (oder beide, falls ein duales bzw. doppeltes System verwendet wird, wie vorstehend erläutert) an anderer Stelle auf dem Rahmen 28 angeordnet werden, beispielsweise auf einem vertikalen Element 42. Außerdem müssen vertikale Elemente erforderlichenfalls beispielsweise durch Anbringen zusätzlicher horizontaler Elemente 44 an einem vertikalen Endelement durch eine Verbindung zwischen den horizontalen und vertikalen Elementen hinzugefügt werden. Die Verbindung verbindet die vertikalen Elemente mechanisch durch das horizontale Element und ermöglicht eine Luftströmung dazwischen, beispielsweise durch vordere Kanäle 40, wie in Figur 1 gezeigt. Mehrere Spalten können dem Rahmen hinzugefügt werden, um Gruppierungen unterschiedlicher Größen bereitzustellen. Die vertikalen Elemente können durch einen ähnlichen Verbindungsmechanismus vertikal verlängert werden, um zusätzliche Zeilen bereitzustellen. Diese Konstruktion stellt ein flexibles Reinigungssystem bereit, das durch einen einzigen Motor angetrieben werden kann.

Während die in Figur 5 gezeigte Konstruktion einen Rahmen mit vier Spalten und vier Zeilen aufweist, um eine Filtergruppierung mit sechzehn Trommeln bereitzustellen, wird demnach bemerkt, dass der Rahmen so konstruiert sein kann, dass eine beliebige Anzahl an Trommelfiltern bereitgestellt werden kann, und zwar sowohl als austauschbare wie nicht austauschbare Struktur. Außerdem kann das Reinigungssystem als gemeinsamer bzw. einheitlicher Block eingesetzt werden, der durch einen oder mehrere Motoren angetrieben wird, oder als diskrete Einheiten. Die spezielle Konfiguration hängt von verschiedenen Faktoren ab, wie etwa der Filtergruppierungsauslegung und dem Fassungsvermögen der Saugquelle oder der Saugquellen. Es versteht sich, dass sämtliche derartigen Konfigurationen innerhalb des Umfangs der vorliegenden Erfindung liegen.

Unter erneutem Bezug auf Figur 5 werden die Rohre der vier-mal-vier-Gruppierung durch vier Riemen angetrieben. Der Betrieb der Riemen 78b und 78c ist vorstehend erläutert. Die mit den vertikalen Elementen 42a und 42d drehbar verbundenen Rohre werden jedoch jeweils durch Riemen oder Ketten 78a und 78d angetrieben. Der Riemen 78a wird durch ein doppeltes Kettenrad 90 angetrieben, wie in Figur 6B gezeigt, während der Riemen 78d durch ein doppeltes Kettenrad 92 angetrieben wird, wie in Fig. 6C gezeigt. Ein zusätzlicher vertikaler Abschnitt kann zu dem vertikalen Abschnitt 42a hinzugefügt werden, beispielsweise durch die vorstehend erläuterte Verbindung und durch Rückleiten des Riemens 78a zu der anderen Seite der Spannrolle 94, um daraufhin um ein doppeltes Kettenrad eines sich anschließenden Elements herum zu verlaufen.

Der in Figur 5 gezeigte Riemen- und Riemenscheibenaufbau ist auf dem Rahmen zwischen den vertikalen Elementen und der Filtergruppierung angeordnet. Die Anordnung ist von den anderen Figuren aus Gründen der Klarheit weggelassen. Es wird bemerkt, dass weitere geeignete Antriebsanordnungen verwendet werden können.

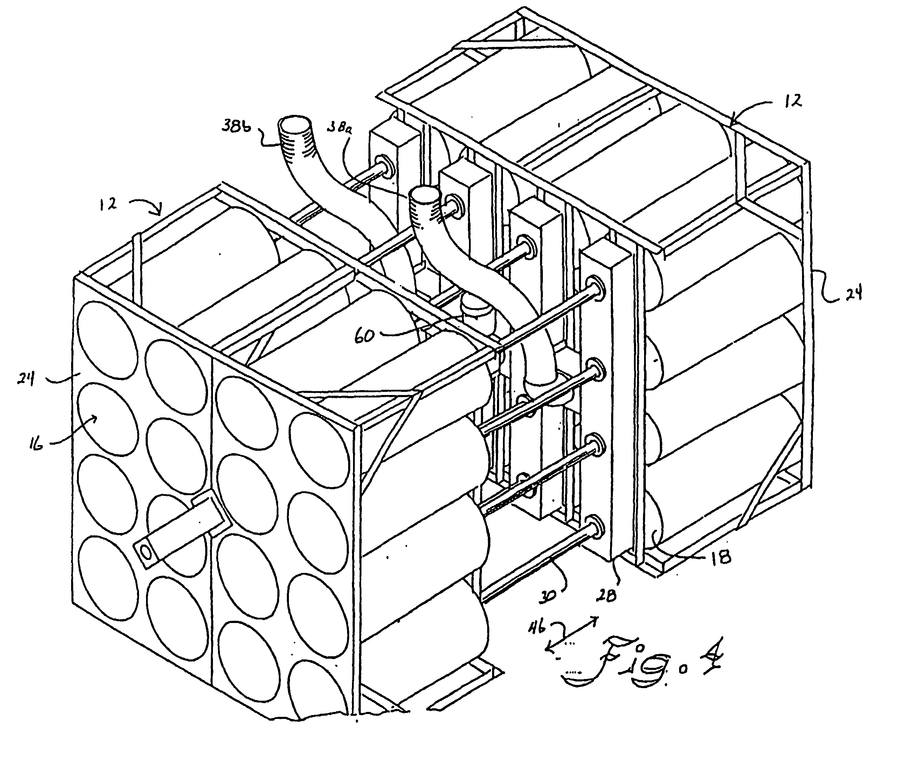

Eine weitere bevorzugte Ausführungsform ist in Figur 4 gezeigt, bei welcher ein einziger Rahmen 28 zwei Gruppierungen von Rohren 30 trägt, die sich in entgegengesetzten Richtungen erstrecken, um Rücken an Rücken liegende Filtergruppierungen 12 bereitzustellen. Der Rahmen 28 bewegt sich hin und her, wie durch den Pfeil 46 dargestellt, um beide Filtergruppierungen in der vorstehend erläuterten Weise zu reinigen. Obwohl in Figur 4 nicht gezeigt, erstrecken sich zwischen jedem der Rohre 30 die in Figur 1 gezeigten Düsen 32, um die Filter beider Gruppierungen zu reinigen. Sämtliche der Rohre 30 werden durch ein gemeinsames Riemen- und Riemenscheibensystem angetrieben, wie beispielsweise in Figur 5 gezeigt, bei welchem jedes Paar von gegenüberliegenden Rohren 30 durch ein gemeinsames Kettenrad 80 angetrieben ist (Figur 5). Da das Riemen- und Riemenscheibensystem dadurch auf einer Seite des Rahmens 28 angeordnet werden kann, erstreckt sich ein Satz von Rohren 30 durch die vertikalen Elemente zu ihren jeweiligen Antriebskettenrädern 80. Demnach können 32 Rohre 30 von Figur 4 durch einen einzigen Motor 60 angetrieben werden.

Während bevorzugte Ausführungsformen der Erfindung vorstehend erläutert wurden, versteht es sich, dass beliebige äquivalente Realisierungen der vorliegenden Erfindung in ihrem Umfang liegen. Die dargestellten Ausführungsformen sind lediglich beispielhaft dargestellt und sollen keine Beschränkungen für die vorliegende Erfindung bilden. Beispielsweise können die vertikalen und horizontalen Elemente, die in den in den Figuren dargestellten Rahmen enthalten sind, durch andere geeignete Strukturen zum drehbaren Tragen der Rohre ersetzt sein, die sich in die Trommelfilter hinein erstrecken.

## Patentansprüche

1. Schwebstoff-Filtersystem, umfassend:
eine Gruppierung von Trommelfiltern (14), wobei jeder Trommelfilter (14) der Gruppierung von Trommelfiltern (14) ein Vorderende (16), in welches Schwebstoff tragende Luft strömt, ein rückwärtiges Ende (18) in Längsrichtung gegenüberliegend zum Vorderende (16), und einen Filterabschnitt, der sich zwischen dem Vorderende (16) und dem rückwärtigen Ende (18) erstreckt, wobei das Vorderende (16), das rückwärtige Ende (18) und der Filterabschnitt einen Innenbereich des Trommelfilters festlegen,
einen Rahmen (28), der in dauerhafter betriebsmäßiger Stellung benachbart zu der Gruppierung von Trommelfiltern (14) auf deren Reingasseite liegt,
mehrere längliche Elemente, wobei jedes längliche Element betriebsmäßig auf dem Rahmen (28) angeordnet ist und sich in einen inneren Bereich des Trommelfilters (14) erstreckt und eine Saugdüse (32) aufweist, die sich von ihm erstreckt, um betriebsmäßig in Verbindung mit der Innenseite des Filterabschnitts zu stehen, um Filtergut von dieser zu entfernen,
einen Antriebsmechanismus, der auf der Reingasseite liegt und betriebsmäßig in Verbindung mit den länglichen Elementen steht, um jedes der länglichen Elemente um seine Längsachse zu drehen, und um jedes der länglichen Elemente im wesentlichen entlang der Längsachse des Trommelfilters (14) hin und her zu bewegen, in welches das längliche Element sich hinein erstreckt, so dass ein Saugende der Saugdüse (32) im wesentlichen über die Innenseite des Filterabschnitts bewegt wird, und
eine Saugquelle, die auf der Reingasseite liegt und sich in betriebsmäßiger Verbindung mit jeder Saugdüse (32) befindet, wobei die Saugquelle so konfiguriert bzw. aufgebaut ist, dass sie Saugkraft bzw. Unterdruck an die Saugdüse (32) anlegt, so dass das Filtergut durch diese hindurch gezogen wird, wobei
der Rahmen (28) benachbart zu den rückwärtigen Enden (18) der Trommelfilter (14) der Gruppierung (12) von Trommelfiltern (14) angeordnet ist und sich die länglichen Elemente durch die jeweiligen rückwärtigen Enden (18) erstrecken, und
wobei das rückwärtige Ende (18) von jedem der Trommelfilter (14) eine Platte aufweist, um eine Strömung der die Schwebstoffe tragenden Luft durch dieses hindurch zu verhindern, und wobei jedes der länglichen Elemente sich durch eine jeweilige Platte in dichtendem Eingriff mit dieser erstreckt.

2. System nach Anspruch 1, **dadurch gekennzeichnet, dass** der Rahmen (28) einen Rahmenabschnitt aufweist, an welchem die länglichen Elemente drehbar in axial feststehender Stellung angebracht sind, und wobei der Antriebsmechanismus betriebsmäßig dem Rahmenabschnitt zugeordnet ist, um den Rahmenabschnitt in bezug auf die Trommelfilter (14) axial hin und her zu bewegen.

3. System nach Anspruch 2, **dadurch gekennzeichnet, dass** der Antriebsmechanismus einen Kreuzspindel-Aufbau aufweist, der in bezug auf die Trommelfilter axial so ausgerichtet ist, dass der Kreuzspindel-Aufbau den Rahmenabschnitt in bezug auf die Trommelfilter der Trommelfiltergruppierung axial antreibt, und ein Motor (60) dem Kreuzspindel-Aufbau betriebsmäßig zugeordnet ist, um den Kreuzspindel-Aufbau anzutreiben.

4. System nach Anspruch 3, **dadurch gekennzeichnet, dass** der Motor (60) betriebsmäßig den länglichen Elementen zugeordnet ist, um die länglichen Elemente in Drehung zu versetzen.

5. System nach Anspruch 1, **gekennzeichnet durch** zumindest zwei Saugleitungen, wobei eine erste Saugleitung sich in betriebsmäßiger Zuordnung zu einer ersten Gruppe der Saugdüsen (32) und der Saugquelle so befindet, dass Saugkraft bzw. Unterdruck an die Saugdüsen (32) der ersten Gruppe von der Saugquelle angelegt wird, eine zweite Saugleitung in betriebsmäßiger Verbindung mit einer zweiten Gruppe von Saugdüsen (32) und der Saugquelle derart, dass Saugkraft bzw. Unterdruck an die Saugdüsen (32) der zweiten Gruppe von der Saugquelle angelegt wird, und einen Steuermechanismus (54), der so konfiguriert ist, dass er selektiv Saugkraft bzw. Unterdruck von der Saugquelle an die Saugdüsen (32) der ersten und der zweiten Gruppe anlegt.

6. System nach Anspruch 5, **dadurch gekennzeichnet, dass** die Saugleitungen Saugkraft bzw. Unterdruck an die Saugdüsen (32) durch das Rahmenelement und die länglichen Elemente anlegen, von welchen die Saugdüsen sich so erstrecken, dass das Filtergut durch die Saugdüsen, die länglichen Elemente und die Saugleitungen gezogen wird.

7. System nach Anspruch 5, **dadurch gekennzeichnet, dass** der Steuermechanismus (54) eine erste Drosselklappe (36a) aufweist, die in geschlossenem Zustand das Saugen durch die erste Saugleitung blockiert und in einem offenen Zustand das Saugen durch die erste Saugleitung zulässt, und eine zweite Drosselklappe (36b), die in einem geschlossenen Zustand das Saugen durch die zweite Saugleitung blockiert und in einem offenen Zustand das Saugen durch die zweite Saugleitung zulässt, und wobei der Steuermechanismus (54) die erste Drosselklappe (36a) und die zweite Drosselklappe (36b) öffnet und schließt.

8. System nach Anspruch 5, **dadurch gekennzeichnet, dass** der Steuermechanismus (54) eine Saugkraft bzw. einen Unterdruck an die Saugdüsen (32) der ersten Gruppe anlegt, wenn die Saugdüsen (32) der ersten Gruppe in einer ersten Längsrichtung innerhalb eines inneren Bereichs bewegt werden, und wobei der Steuermechanismus (54) eine Saugkraft bzw. einen Unterdruck an die Saugdüsen (32) der zweiten Gruppe anlegt, wenn die Saugdüsen (32) der zweiten Gruppe in die entgegengesetzte Längsrichtung innerhalb des inneren Bereichs bewegt werden.

9. System nach Anspruch 1, **gekennzeichnet durch** eine Abdeckung, die dem Vorderende (16) von zumindest einem Trommelfilter (14) zugeordnet ist, wobei die Abdeckung so konfiguriert ist, dass sie selektiv über dem Vorderende (16) des zumindest einen Trommelfilters (14) angeordnet wird, um Luftströmung in den zumindest einen Trommelfilter (14) zu blockieren.

10. System nach Anspruch 1, **dadurch gekennzeichnet, dass** der Filterabschnitt von jedem Trommelfilter (14) einen im wesentlichen zylindrischen Oberflächenbereich zwischen dem Vorderende (16) und dem rückwärtigen Ende (18) festlegt.

11. Schwebstoff-Filtersystem aufweisend:
eine erste Gruppierung von Trommelfiltern (14), wobei jeder Trommelfilter (14) der ersten Gruppierung von Trommelfiltern (14) ein Vorderende (16) aufweist, in welches Schwebstoffe tragende Luft strömt, ein rückwärtiges Ende (18), das in Längsrichtung gegenüberliegend zum ersten Ende liegt, und einen Filterabschnitt, der sich zwischen dem Vorderende (16) und dem rückwärtigen Ende (18) erstreckt, wobei das vordere Ende (16), das rückwärtige Ende (18) und der Filterabschnitt einen inneren Bereich des Trommelfilters (14) festlegen,
eine zweite Gruppierung auf deren Reingasseiten von Trommelfiltern (14), die axial mit der ersten Gruppierung so ausgerichtet sind, dass die rückwärtigen Enden (18) der Trommelfilter (14) der ersten Gruppierung den rückwärtigen Enden (18) der Trommelfilter (14) der zweiten Gruppierung gegenüberliegen,
einen Rahmen (28), der in dauerhafter betriebsmäßiger Stellung zwischen der ersten Gruppierung und der zweiten Gruppierung auf deren Reingasseiten und benachbart zu den rückwärtigen Enden (18) der Trommelfilter (14) der ersten Gruppierung und der zweiten Gruppierung angeordnet ist,
mehrere längliche Elemente, wobei jedes längliche Element drehbar um seine Längsachse auf einem Abschnitt des Rahmens (28) angeordnet ist und ein erstes Ende aufweist, das sich durch das rückwärtige Ende (18) in den inneren Bereich des Trommelfilters (14) der ersten Gruppierung erstreckt, ein zweites Ende, das sich durch das rückwärtige Ende (18) in den inneren Bereich des Trommelfilters (14) der zweiten Gruppierung erstreckt, und zwei Saugdüsen (32), wobei jede Saugdüse (32) sich von dem länglichen Element benachbart zu einem jeweiligen ersten Ende und dem zweiten Ende erstreckt, um betriebsmäßig mit der Innenseite der jeweiligen Filterabschnitte zum Entfernen von Filtergut von dieser in Verbindung zu stehen,
einen Antriebsmechanismus, der auf den Reingasseiten liegt und sich in betriebsmäßiger Verbindung mit den länglichen Elementen und dem Rahmenabschnitt befindet, um gleichzeitig,
jedes längliche Element um seine Längsachse zu drehen, und
den Rahmenabschnitt in bezug auf die Trommelfilter (14) axial derart hin und her zu bewegen, dass ein Saugende von jeder Saugdüse (32) im wesentlichen über die Innenseite des Filterabschnitts bewegt wird, und
eine Saugquelle, die auf den Reingasseiten liegt und sich in betriebsmäßiger Verbindung mit jeder Saugdüse (32) befindet, wobei die Saugquelle so konfiguriert ist, dass sie Saugkraft bzw. Unterdruck an die Saugdüse (32) so anlegt, dass Filtergut durch sie hindurch gezogen wird, wobei die rückwärtigen Enden (18) von den Trommelfiltern (14) der Gruppierungen jeweils eine Platte aufweisen, um eine Strömung der die Schwebstoffe tragenden Luft durch diese Enden hindurch zu verhindern, und wobei jedes der länglichen Elemente sich durch eine jeweilige Platte in dichtendem Eingriff mit dieser erstreckt.

12. System nach Anspruch 1 oder 11, **dadurch gekennzeichnet, dass** die Saugquelle zumindest zwei Saugleitungen aufweist, wobei eine erste Saugleitung sich in betriebsmäßiger Zuordnung zu einer ersten Gruppe von Saugdüsen (32) befindet, um Saugkraft bzw. Unterdruck an die Saugdüsen (32) der ersten Gruppe so anzulegen, dass das Filtergut durch die Saugdüsen (32) der ersten Gruppe gezogen wird, eine zweite Saugleitung in betriebsmäßiger Verbindung mit einer zweiten Gruppe von Saugdüsen (32), um Saugkraft bzw. Unterdruck an die Saugdüsen (32) der zweiten Gruppe so anzulegen, dass das Filtergut durch die Saugdüsen (32) der zweiten Gruppe gezogen wird, und einen Steuermechanismus (54), der so konfiguriert ist, dass er selektiv Saugkraft bzw. Unterdruck durch die ersten und zweiten Saugleitungen an die Saugdüsen (32) der ersten Gruppe und der zweiten Gruppe anlegt.

13. System nach Anspruch 12, wobei jede Saugleitung Saugkraft bzw. Unterdruck an seine jeweiligen Saugdüsen (32) durch das Rahmenelement und die länglichen Elemente anlegt, von welchem die Saugdüsen (32) sich so erstrecken, dass das Filtergut durch die Saugdüsen (32), die länglichen Elemente und die Saugleitungen gezogen wird.

14. System nach Anspruch 12, wobei der Steuermechanismus (54) eine erste Drosselklappe (36a) aufweist, die im geschlossenem Zustand das Saugen durch die erste Saugleitung blockiert und im offenen Zustand das Saugen durch die erste Saugleitung ermöglicht und eine zweite Drosselklappe (36b), die im geschlossenen Zustand das Saugen durch die zweite Saugleitung blockiert und im offenen Zustand das Saugen durch die zweite Saugleitung ermöglicht, und wobei der Steuermechanismus (54) die erste Drosselklappe (36a) und die zweite Drosselklappe (36b) öffnet und schließt.

## Claims

1. Suspended particle filter system comprising:
a grouping of drum filters (14), whereby each drum filter (14) of the said grouping of drum filters (14) comprises a front end (16) into which air containing suspended particles flows, a rear end (18) longitudinally opposed to the said front end (16), and a filter section extending between the said front end (16) and the said rear end (18), whereby the front end (16), the rear end (18) and the filter section together define an internal area of the drum filter,
a frame (28) located in a permanently operational position adjacent to the grouping of drum filters (14) on the clean gas side of the same,
several longitudinal elements, whereby each of the longitudinal elements is operationally positioned upon the frame (28), and whereby each one extends into an internal area of the drum filter (14) and comprises a suction nozzle (32), whereby the same extends from the said filter and is connected with the internal side of the filter section in order to remove filtered matter from the same,
a drive mechanism located on the clean gas side and operationally connected with the longitudinal elements in order to rotate each of the said longitudinal elements around its longitudinal axis, and in order to reciprocally move each one of the said longitudinal elements substantially along the longitudinal axis of the drum filter (14), whereby the longitudinal elements extend into the same, so that a suction end of the suction nozzle (32) will be substantially moved across the internal side of the filter section, and
a suction source positioned on the clean gas side and operationally connected with each suction nozzle (32), whereby the suction source is configured or constructed, respectively, in such a way that the same applies a suction force or an underpressure, respectively, to the suction nozzle (32), so that the filtered matter can be sucked through the same, whereby
the frame (28) is located adjacent to the rear ends (18) of the drum filters (14) of the grouping (12) of drum filters (14), and whereby the longitudinal elements extend through the relevant rear ends (18), and
whereby the rear end (18) of each of the drum filters (14) comprises a plate in order to avoid a flow of air carrying suspended particles through the same, and whereby each of the longitudinal elements extends through the relevant plate and sealingly engages the same.

2. System according to claim 1, **characterised in that** the frame (28) comprises a frame section onto which the longitudinal elements are rotationally affixed in an axially fixed position, and whereby the drive mechanism is operationally associated with the frame section in order to axially and reciprocally move the said frame section in relation to the drum filters (14).

3. System according to claim 2, **characterised in that** the drive mechanism comprises a cross-spindle construction, whereby the same is axially positioned in relation to the drum filters in such a way that the said cross-spindle construction axially drives the frame section in relation to the drum filters of the drum filter grouping, and whereby a motor (60) is operationally associated with the cross-spindle construction in order to drive the said cross-spindle construction.

4. System according to claim 3, **characterised in that** the motor (60) is operationally associated with the longitudinal elements in order to rotate the same longitudinal elements.

5. System according to claim 1, **characterised in that** the same comprises at least two suction lines, whereby a first suction line is located in operational association with a first group of suction nozzles (32), and whereby the suction source is positioned in such a way that a suction force or an underpressure, respectively, is applied to the suction nozzles (32) of the first group by the said suction source, and whereby a second suction line is located in operational association with a second group of suction nozzles (32) and the suction source, such that a suction force or an underpressure, respectively is applied to the suction nozzles (32) of the second group by the suction source, and whereby a drive mechanism (54) is configured in such a way that the same selectively applies a suction force or an underpressure, respectively, via the suction source to the suction nozzles (32) of the first and the second group.

6. System according to claim 5, **characterised in that** the suction lines apply a suction force or an underpressure, respectively, to the suction nozzles (32) via the frame element and the longitudinal elements, from which the suction nozzles extend in such a way that filtered matter is sucked through the said suction nozzles, the longitudinal elements, and the suction lines.

7. System according to claim 5, **characterised in that** the control mechanism (54) comprises a first throttle (36a) which blocks the suction through the first suction line in a closed condition, and which permits the suction through the first suction line in an opened condition, and a second throttle (36b) which blocks the suction through the second suction line in a closed condition, and which permits the suction through the second suction line in an opened condition, whereby the control mechanism (54) opens and closes the first throttle (36a) and the second throttle (36b).

8. System according to claim 5, **characterised in that** the control mechanism (54) applies a suction force or an underpressure, respectively, to the suction nozzles (32) of the first group when the said suction nozzles (32) of the first group are moved in a first longitudinal direction within an internal area, and whereby the control mechanism (54) applies a suction force or an underpressure, respectively, to the suction nozzles (32) of the second group when the suction nozzles (32) of the second group are moved in the opposite longitudinal direction within the internal area.

9. System according to claim 1, **characterised in that** the same comprises a cover, whereby the same is associated with the front end (16) of at least one drum filter (14), and whereby the said cover is configured in such a way that it can be selectively positioned over the front end (16) of at least one drum filter (14) in order to block the flow of air into at least one drum filter (14).

10. System according to claim 1, **characterised in that** the filter section of each drum filter (14) defines a substantially cylindrical upper surface area between the front end (16) and the rear end (18).

11. Suspended particle filter system comprising:
a first grouping of drum filters (14), whereby each drum filter (14) of the first grouping of drum filters (14) comprises a front end (16) into which air carrying suspended particles flows, a rear end (18) located longitudinally opposite the first end, and a filter section, whereby the same extends between the front end (16) and the rear end (18), and whereby the front end (16), the rear end (18), and the filter section together define an internal area of the drum filter (14),
a second grouping on the clean gas side of the said drum filters (14), whereby the same are axially aligned with the first grouping in such a way that the rear ends (18) of the drum filters (14) of the first grouping are positioned opposite the rear ends (18) of the drum filters (14) of the second grouping,
a frame (28) permanently operationally positioned between the first grouping and the second grouping on the clean gas side of the same and adjacent to the rear ends (18) of the drum filters (14) of the first grouping and the second grouping,
several longitudinal elements, whereby each of the longitudinal elements is rotationally positioned around its longitudinal axis upon a section of the frame (28), and whereby the same comprises a first end which extends through the rear end (18) into the internal area of the drum filter (14) of the first grouping, and a second end which extends through the rear end (18) into the internal area of the drum filter (14) of the second grouping, and two suction nozzles (32), whereby each suction nozzle (32) extends from the adjacent longitudinal element towards a first end and the second end in order to operationally engage the internal side of the relevant filter sections to remove filtered matter from the same,
a drive mechanism positioned on the clean gas side of the same, whereby the same is operationally associated with the longitudinal elements and the frame section, to simultaneously rotate each longitudinal element around its longitudinal axis, and
to axially and reciprocably move the frame section in relation to the drum filter (14) in such a way that a suction end of each suction nozzle (32) is moved substantially across the internal area of the filter section and
a suction source positioned on the clean gas side of the same, whereby the same is operationally associated with each suction nozzle (32), and whereby the suction source is configured in such a way that a suction force or an underpressure, respectively, is applied to the suction nozzle (32) in such a way that filtered matter is sucked through the same, whereby the rear ends (18) of the drum filters (14) of the relevant groupings each comprise a plate in order to block a flow of air carrying suspended particles through these ends, and whereby each of the longitudinal elements extends through a relevant plate and sealingly engages the same.

12. System according to claim 1 or 11, **characterised in that** the suction source comprises at least two suction lines, whereby a first suction line is positioned in operational association with a first group of suction nozzles (32) in order to apply a suction force or an underpressure, respectively, to the suction nozzles (32) of the first group in such a way that filtered matter is sucked through the suction nozzles (32) of the first group, and whereby a second suction line is positioned in operational association with a second group of suction nozzles (32) in order to apply a suction force or an underpressure, respectively, to the suction nozzles (32) of the second group in such a way that filtered matter is sucked through the same, and a control mechanism (54) configured in such a way that the same selectively applies a suction force or an underpressure, respectively, via the first and second suction lines to the suction nozzles (32) of the first group and the second group.

13. System according to claim 12, whereby each suction line applies a suction force or an underpressure, respectively, to its relevant suction nozzles (32) through the frame element and the longitudinal elements, from which the suction nozzles (32) extend in such a way that filtered matter is sucked through the suction nozzles (32), the longitudinal elements, and the suction lines.

14. System according to claim 12, whereby the control mechanism (54) comprises a first throttle (36a) which blocks the suction through the first suction line in a closed condition, and which permits the suction through the first suction line in an opened condition, and a second throttle (36b) which blocks the suction through the second suction line in a closed condition, and which permits the suction through the second suction line in an opened condition, and whereby the control mechanism (54) opens and closes the first throttle (36a) and the second throttle (36b).

## Revendications

1. Système de filtration pour matières suspendues, comprenant :
un groupement de filtres à tambour (14), dans lequel chaque filtre à tambour (14) du groupement de filtres à tambour (14) comporte une extrémité avant (16), dans laquelle s'écoule de l'air portant des matières suspendues, une extrémité arrière (18) se trouvant en face de l'extrémité avant (16) dans la direction longitudinale, et une section de filtration, qui s'étend entre l'extrémité avant (16) et l'extrémité arrière (18), sachant que l'extrémité avant (16), l'extrémité arrière (18) et la section de filtration définissent une zone intérieure du filtre à tambour,
un cadre (28) qui, en position fonctionnelle permanente, se trouve voisin du groupement de filtres à tambour (14), sur son côté du gaz épuré,
plusieurs éléments allongés, sachant que chaque élément allongé est disposé fonctionnellement sur le cadre (28) et s'étend dans une zone intérieure du filtre à tambour (14) et comprend une buse d'aspiration (32) qui s'étend à partir de lui pour se trouver fonctionnellement en relation avec la face intérieure de la section de filtration en vue de retirer la matière filtrée de cette dernière,
un mécanisme d'entraînement qui se trouve du côté du gaz épuré et qui se trouve en relation fonctionnelle avec les éléments allongés pour tourner chacun des éléments allongés autour de son axe longitudinal et pour déplacer chacun des éléments allongés, essentiellement dans un sens et dans l'autre le long de l'axe longitudinal du filtre à tambour (14) à l'intérieur duquel l'élément longitudinal s'étend, de telle sorte qu'une extrémité aspirante de la buse d'aspiration (32) est déplacée essentiellement par-dessus la face intérieure de la section de filtration et
une source d'aspiration qui se trouve du côté du gaz épuré et se trouve en relation fonctionnelle avec chaque buse d'aspiration (32), sachant que la source d'aspiration est configurée, respectivement construite de telle sorte qu'elle exerce une force d'aspiration, respectivement un vide à la buse d'aspiration (32), de telle sorte que la matière filtrée est tirée à travers cette dernière, sachant que
le cadre (28) est disposé au voisinage des extrémités arrière (18) des filtres à tambour (14) du groupement (12) de filtres à tambour (14) et que les éléments allongés s'étendent à travers les extrémités arrière (18) respectives, et
sachant que l'extrémité arrière (18) de chacun des filtres à tambour (14) comporte une plaque pour empêcher un écoulement par ladite extrémité de l'air qui porte les matières en suspension, et sachant que chacun des éléments allongés s'étend à travers une plaque respective en prise d'étanchement avec cette dernière.

2. Système selon la revendication 1, **caractérisé en ce que** le cadre (28) présente une section de cadre sur laquelle les éléments allongés sont montés tournants dans une position axialement fixe, et dans lequel le mécanisme d'entraînement est affecté fonctionnellement à la section de cadre, pour déplacer la section de cadre axialement dans un sens et dans l'autre par rapport aux filtres à tambour (14).

3. Système selon la revendication 2, **caractérisé en ce que** le mécanisme d'entraînement comprend une construction en tiges filetées croisées qui, par rapport aux filtres à tambour, est orientée axialement de telle sorte que la construction en tiges filetées croisées actionne axialement la section de cadre par rapport aux filtres à tambour du groupement de filtres à tambour, et qu'un moteur (60) est affecté fonctionnellement à la construction en tiges filetées croisées, pour entraîner la construction en tiges filetées croisées.

4. Système selon la revendication 3, **caractérisé en ce que** le moteur (60) est affecté fonctionnellement aux éléments allongés pour imprimer aux éléments allongés une rotation.

5. Système selon la revendication 1, **caractérisé par** au moins deux conduites d'aspiration, sachant qu'une première conduite d'aspiration se trouve en affectation fonctionnelle à un premier groupe des buses d'aspiration (32) et à la source d'aspiration de telle sorte que la force d'aspiration, respectivement le vide est communiqué aux buses d'aspiration (32) du premier groupe depuis la source d'aspiration, qu'une deuxième conduite d'aspiration se trouve en communication fonctionnelle avec un deuxième groupe de buses d'aspiration (32) et avec la source d'aspiration de telle sorte que la force d'aspiration, respectivement le vide est communiqué aux buses d'aspiration (32) du deuxième groupe depuis la source d'aspiration, et par un mécanisme de commande (54) qui est configuré de telle sorte qu'il communique sélectivement la force d'aspiration, respectivement le vide, de la source d'aspiration aux buses d'aspiration (32) du premier et du deuxième groupe.

6. Système selon la revendication 5, **caractérisé en ce que** les conduites d'aspiration communiquent la force d'aspiration, respectivement le vide aux buses d'aspiration (32) par l'élément de cadre et les éléments allongés, à partir desquels les buses d'aspiration s'étendent de telle sorte que la matière filtrée est tirée à travers les buses d'aspiration, les éléments allongés et les conduites d'aspiration.

7. Système selon la revendication 5, **caractérisé en ce que** le mécanisme de commande (54) comprend un premier papillon (36a) qui, à l'état fermé, bloque l'aspiration à travers la première conduite d'aspiration et, à l'état ouvert, autorise l'aspiration à travers la première conduite d'aspiration, et un deuxième papillon (36b) qui, à l'état fermé, bloque l'aspiration à travers la deuxième conduite d'aspiration et, à l'état ouvert, autorise l'aspiration à travers la deuxième conduite d'aspiration, et sachant que le mécanisme de commande (54) ouvre et ferme le premier papillon (36a) et le deuxième papillon (36b).

8. Système selon la revendication 5, **caractérisé en ce que** le mécanisme de commande (54) communique une force d'aspiration, respectivement un vide aux buses d'aspiration (32) du premier groupe quand les buses d'aspiration (32) du premier groupe sont déplacées dans une première direction longitudinale à l'intérieur d'une zone intérieure, et sachant que le mécanisme de commande (54) communique une force d'aspiration, respectivement un vide aux buses d'aspiration (32) du deuxième groupe quand les buses d'aspiration (32) du deuxième groupe sont déplacées dans la direction longitudinale opposée à l'intérieur de la zone intérieure.

9. Système selon la revendication 1, **caractérisé par** un recouvrement qui est affecté à l'extrémité avant (16) d'au moins un filtre à tambour (14), sachant que le recouvrement est configuré de telle sorte qu'il est disposé sélectivement au-dessus de l'extrémité avant (16) du au moins un filtre à tambour (14) pour bloquer l'écoulement de l'air dans le au moins un filtre à tambour (14).

10. Système selon la revendication 1, **caractérisé en ce que** la section de filtration de chaque filtre à tambour (14) définit une zone de surface essentiellement cylindrique entre l'extrémité avant (16) et l'extrémité arrière (18).

11. Système de filtration pour matières suspendues, comprenant :
un premier groupement de filtres à tambour (14), dans lequel chaque filtre à tambour (14) du premier groupement de filtres à tambour (14) comporte une extrémité avant (16), dans laquelle s'écoule de l'air portant des matières suspendues, une extrémité arrière (18) se trouvant en face de la première extrémité dans la direction longitudinale, et une section de filtration, qui s'étend entre l'extrémité avant (16) et l'extrémité arrière (18), sachant que l'extrémité avant (16), l'extrémité arrière (18) et la section de filtration définissent une zone intérieure du filtre à tambour (14),
sur ses côtés de gaz épuré, un deuxième groupement de filtres à tambour (14), qui sont orientés axialement avec le premier groupement de telle sorte que les extrémités arrière (18) des filtres à tambour (14) du premier groupement se trouvent en face des extrémités arrière (18) des filtres à tambour (14) du deuxième groupement,
un cadre (28) qui, en position fonctionnelle permanente, est disposé entre le premier groupement et le deuxième groupement sur leurs côtés du gaz épuré, et qui est voisin des extrémités arrière (18) des filtres à tambour (14) du premier groupement et du deuxième groupement,
plusieurs éléments allongés, sachant que chaque élément allongé est disposé sur une section du cadre (28) de manière à tourner autour de son axe longitudinal, et comporte une première extrémité qui s'étend à travers l'extrémité arrière (18) dans la zone intérieure du filtre à tambour (14) du premier groupement, une deuxième extrémité qui s'étend à travers l'extrémité arrière (18) dans la zone intérieure du filtre à tambour (14) du deuxième groupement, et deux buses d'aspiration (32), sachant que chaque buse d'aspiration (32) s'étend respectivement au voisinage de l'élément allongé jusqu'à une première extrémité respective et jusqu'à la deuxième extrémité pour se trouver en relation fonctionnelle avec la face intérieure des sections de filtration respectives en vue de retirer de la matière filtrée de ces dernières,
un mécanisme d'entraînement qui se trouve du côté du gaz épuré et qui se trouve en relation fonctionnelle avec les éléments allongés et la section de cadre, pour, en même temps,
tourner chaque élément allongé autour de son axe longitudinal et
déplacer axialement la section de cadre par rapport aux filtres à tambour (14) dans un sens et dans l'autre de telle sorte qu'une extrémité d'aspiration de chaque buse d'aspiration (32) est déplacée essentiellement par-dessus la face intérieure de la section de filtration, et
une source d'aspiration qui se trouve du côté du gaz épuré et se trouve en relation fonctionnelle avec chaque buse d'aspiration (32), sachant que la source d'aspiration est configurée de telle sorte qu'elle communique une force d'aspiration, respectivement un vide à la buse d'aspiration (32), de telle sorte que la matière filtrée est tirée à travers cette dernière, sachant que les extrémités arrière (18) des filtres à tambour (14) des groupements comprennent chacune une plaque, pour empêcher un écoulement de l'air qui porte les matières en suspension à travers ces extrémités, et sachant que chacun des éléments allongés s'étend à travers une plaque respective en prise d'étanchement avec cette dernière.

12. Système selon la revendication 1 ou 11, **caractérisé en ce que** la source d'aspiration comporte au moins deux conduites d'aspiration, sachant qu'une première conduite d'aspiration se trouve en affectation fonctionnelle à un premier groupe de buses d'aspiration (32) pour communiquer la force d'aspiration, respectivement le vide aux buses d'aspiration (32) du premier groupe de telle sorte que la matière filtrée soit tirée par les buses d'aspiration (32) du premier groupe, qu'une deuxième conduite d'aspiration se trouve en affectation fonctionnelle à un deuxième groupe de buses d'aspiration (32) pour communiquer la force d'aspiration, respectivement le vide aux buses d'aspiration (32) du deuxième groupe, de telle sorte que la matière filtrée soit tirée par les buses d'aspiration (32) du deuxième groupe, et un mécanisme de commande (54) qui est configuré de telle sorte qu'il communique sélectivement la force d'aspiration, respectivement le vide aux buses d'aspiration (32) du premier groupe et du deuxième groupe à travers les premières et les deuxièmes conduites d'aspiration.

13. Système selon la revendication 12, dans lequel chaque conduite d'aspiration communique la force d'aspiration, respectivement le vide à ses buses d'aspiration (32) respectives à travers l'élément de cadre et les éléments allongés à partir desquels les buses d'aspiration (32) s'étendent, de telle sorte que la matière filtrée est tirée à travers les buses d'aspiration (32), les éléments allongés et les conduites d'aspiration.

14. Système selon la revendication 12, dans lequel le mécanisme de commande (54) comporte un premier papillon (36a) qui bloque à l'état fermé l'aspiration à travers la première conduite d'aspiration et qui permet à l'état ouvert l'aspiration à travers la première conduite d'aspiration, et un deuxième papillon (36b) qui bloque à l'état fermé l'aspiration à travers la deuxième conduite d'aspiration et qui permet à l'état ouvert l'aspiration à travers la deuxième conduite d'aspiration, et dans lequel le mécanisme de commande (54) ouvre et ferme le premier papillon (36a) et le deuxième papillon (36b).
